(19) Europäisches Patentamt
European Patent Office
Office européen des brevets

(11) Publication number: 0 048 080 B1

(12) EUROPEAN PATENT SPECIFICATION

(45) Date of publication of patent specification: 06.07.88

(51) Int. Cl.$^4$: C 08 G 73/10

(21) Application number: 81303041.8

(22) Date of filing: 03.07.81

# (54) Polyimides.

(30) Priority: 12.09.80 US 186668
14.04.81 US 254137
14.04.81 US 254138
27.05.81 US 267459
27.05.81 US 267460

(43) Date of publication of application:
24.03.82 Bulletin 82/12

(45) Publication of the grant of the patent:
06.07.88 Bulletin 88/27

(84) Designated Contracting States:
CH DE FR GB IT LI NL SE

(56) References cited:
GB-A-1 037 374
US-A- 30 213
US-A-3 424 718
US-A-3 793 281
Chemical Abstracts, vol. 91, no. 12, 17 September 1979, Columbus, Ohio, USA J. GAGLIANI et al. "Nonflammable polyimide materials for commercial application" page 47, column 1, abstract no. 92618n

(73) Proprietor: Imi-Tech Corporation
701 Fargo Avenue
Elk Grove Village Illinois 60007 (US)

(72) Inventor: Gagliani, John
6208 Lance Place
San Diego California 92120 (US)
Inventor: Lee, Raymond
5501 Fontaine Street
San Diego California (US)

(74) Representative: Harrison, Michael Robert et al
URQUHART-DYKES & LORD 5th Floor Tower
House Merrion Way
Leeds LS2 8PA West Yorkshire (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 048 080 B1

Courier Press, Leamington Spa, England.

**Description**

The present invention relates, in one aspect, to polyimides and, more particularly, to certain novel polyimides which have improved properties by virtue of their being terpolymers derived from tetracarboxylic acids and combinations of heterocyclic, aromatic, and aliphatic diamines.

In other aspects our invention relates to precursors of the just alluded to terpolyimides and their preparation and to the conversion of the precursors to the corresponding terpolymers.

U.S. Reissue Patent No. 30,213 issued February 12, 1980, to John Gagliani et al for METHOD OF MAKING FOAMED COPOLYIMIDES AND PRODUCTS OBTAINED THEREFROM and copending U.S. patent application No. 935,378 filed August 21, 1978, by John Gagliani for POLYIMIDES disclose hydrolytically stable copolyimide foams which are fire resistant and give off essentially no smoke or toxic fumes when they are heated to degradation temperatures. Consequently, those foams are useful in aircraft cabins, space vehicles, and land and sea transport and in a variety of other applications where human life or equipment might be endangered by the overheating of conventional, more flammable, smoke-emitting materials. They can be used, in such applications, in fire containing walls and lightweight structures, to protect fuel tanks and heat sensitive systems, and as void filler materials and thermal, cryogenic, termal, electrical and acoustical insulations, for example.

The polymers described in the foregoing patent and patent application are derived from an alkyl diester of 3,3′,4,4′-benzophenonetetracarboxylic acid, an aromatic diamine, and a heterocyclic diamine.

We have now discovered that polyimide foams which are in many ways superior to those identified above can be made without sacrificing the desirable attributes of the latter by adding a third diamine of aliphatic character to the precursor from which the polyimide is made. Typical advantages of such foams are increased flexibility and resiliency, greater fatigue resistance, and improved compression set properties.

Compression set is a measure of the extent to which a foam will take on a permanent set or deformation after having been compressed to a stated fraction of its original thickness for a prolonged period of time. This is important in seating applications, for example; materials which are susceptible to compression set reach the point where tactile comfort becomes unacceptable much sooner than those having good compression set properties.

Generally speaking, then, our novel terpolyimides disclosed herein are prepared from precursors which are solutions of a lower alkyl ester of 3,3′,4,4′-benzophenonetetracarboxylic acid or a mixture of such esters, an aromatic diamine which is free of aliphatic moieties, heterocyclic diamine, and an aliphatic diamine. The imide-forming functionalities (the amino and carboxylic moieties) are preferably present in substantially equimolar amounts.

Exemplary of the aromatic and heterocyclic diamines that can be employed are:

2,6-diaminopyridine
4,4′-diaminodiphenyl sulfone
p,p′-methylene dianiline
4,4′-diaminodiphenyl ether

Many other aromatic and heterocyclic diamines have been described in the open and patent literature dealing with the making of polyimides — see, for example, U.S. Patents Nos. 3,179,614 issued April 20, 1965, to Edwards for POLYAMIDE-ACIDS, COMPOSITIONS THEREOF AND PROCESS FOR THEIR PREPARATION; 3,575,891 issued April 20, 1971, to LeBlanc et al for STABILIZED POLYIMIDES; and 3,629,180 issued December 21, 1971, to Yoda et al for PROCESS FOR THE PRODUCTION OF A THERMALLY STABLE POLYMER. Aromatic and heterocyclic diamines selected from those listed in the foregoing patents can be utilized in terpolyimides in accord with the principles of our invention as can others; and we consequently consider our invention to embrace the use of all operable aromatic and heterocyclic diamines.

Aliphatic diamines having from three to 12 carbon atoms have been employed, however, diamines having no more than six carbon atoms will typically prove preferable. The use of those with longer chains can lead to excess thermoplasticity, and that can cause the foam to collapse as it is generated. Also, aliphatic diamines with even number chains are preferably employed as they are capable of imparting greater thermal stability to terpolyimides of the character described herein than aliphatic diamines with odd numbered chains.

Aliphatic diamines we have employed include:

1,3-diaminopropane
1,4-diaminobutane
1,6-diaminohexane
1,8-diaminooctane
1,12-diaminododecane

and Jeffamine 230. The latter is available from the Jefferson Chemical Company and has the formula:

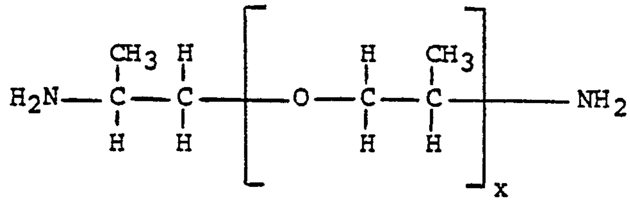

where x is approximately 2.6.

From 0.1 to 0.3 mole of aliphatic diamine per 1.0 mole of benzophenonetetracarboxylic acid can be employed. Concentrations of not more than 0.2 mole per mole of acid are, however, preferred in applications where inflammability is a requirement as the flame resistance of our terpolymers decreases considerably at higher concentrations of the aliphatic diamine.

From 0.05 to 0.8 mole of heterocyclic diamine per mole of acid can be used. Terpolymers with the higher concentration of heterocyclic diamine have the best compression set values and are therefore favored in seat cushioning and other applications of our invention where that property is important.

The precursors of our terpolyimides are essentially monomeric, liquid or solid state solutions of the selected ester (or esters) and diamines.

They are prepared by first reacting 3,3',4,4'-benzophenonetetracarboxylic acid or, preferably, its dianhydride with an esterification agent to form an alkyl diester. Exemplary esterification agents are methyl, ethyl, proplyl, and isopropyl alcohols. Methanol is in many cases preferred because of its widespread availability, low cost, and other attributes; because its use facilitates conversion of the precursor to a polyimide foam; and because the foams made from the methyl esters tend to be more flexible, resilient, and compression set resistant. Ethanol is also a preferred esterifying agent.

The esterification reaction is followed by the addition of the diamines, which are dissolved in the reaction mixture. The temperature is kept below the reflux temperature of the esterification agent during dissolution of the diamines and low enough to avoid polymerization of the diamines and ester.

Graphite, glass, and other fibers, as well as other fillers such as glass microballoons and additives such as crosslinking agents can be added to the resulting composition to impart wanted properties to the final product. A surfactant can also be added to increase fatigue resistance of the terpolyimide foam and to make it more flexible and resilient by increasing the bubble stability of the foam and the uniformity of the cellular structure.

One preferred surfactant is AS-2, a nonionic, fluorinated, polyalkylene copolymer manufactured by E.I. DuPont de Nemours and Company. We have employed from 0.01 to 0.1 percent of this surfactant based on the weight of the ester and diamine constituents. In systems containing 2,6-diamino pyridine and p,p'-methylene dianiline along with the aliphatic diamine and 3,3',4,4'-benzophenonetetracarboxylic acid ester, a concentration of ca. 0.05 percent proved to be optimum.

Another surfactant that has been successfully employed in those systems in concentrations of 0.1 percent is X-3, a nonionic surfactant of the same general chemical composition as AS-2 and manufactured by the same company.

The material existing after dissolution of the diamines and the addition of any additives may range in form from a "liquid resin" to a spreadable, pastelike formulation depending upon the nature and quantity of any fillers added to the resin. The material may be used in the form just described; or it can be transformed into an amorphous powder capable of being converted into a flexible, resilient, terpolyimide foam. Although not essential, it is preferred that spray drying be employed for this purpose because the liquid resin can thereby be transformed on a continuous basis and in one step into a dry powder. Also, spray drying allows for modification of the precursor in ways which can be used to vary the properties of the final product.

One suitable spray drying process is described in copending application No. 186,670 filed September 12, 1980.

The amphorous, powdered resinoid precursor can be converted to a monolithic, terpolyimide foam by various techniques including dielectric, thermal, and microwave heating. The latter, alone or with a thermal post-cure, is preferred because of the speed with which the foam can be generated and cured; because the foam is homogeneously heated; and because handling of the fragile, uncured foam can be avoided.

Microwave techniques and equipment that can be used to foam and cure the precursor are disclosed in copending application No. 186,629 filed September 12, 1980.

Foaming-curing parameters that have proven satisfactory in converting 100 gram samples of representative precursors to flexible, resilient terpolyimide foams are two to 12 minutes exposure to high frequency radiation in an oven operating at a frequency of 2450 MHZ and at 5 KW power followed by thermal heating at a temperature of 500—550°F for 15 minutes to two house.

The resulting foam can be employed as such — in a seat cushion or as insulation, for example. Or, using the procedure described in application No. 935,378 as a further example, the flexible, resilient terpolyimide foam can be converted to a dense, rigid, structurally strong, intumescent material by heating it under pressure.

As suggested above, there are also applications in which the precursor can best be utilized in a liquid or semifluid form. One example is the making of wall and floor panels and other rigid components or artifacts. In a typical application of that character, a layer of the liquid resin, compounded with appropriate fillers, is sandwiched between two pieces of glass cloth wetted with the resin. Foaming and curing of the terpolyimide in a typical wet panel thus formed can be effected in much the same manner as the powdered precursors.

The general model for the chemical reactions which are effected in forming the precursor and in converting it to a polyimide are shown below. The actual reactions are much more complex as three amines, rather than the single aromatic amine shown in the model, are involved

(i) Esterification:

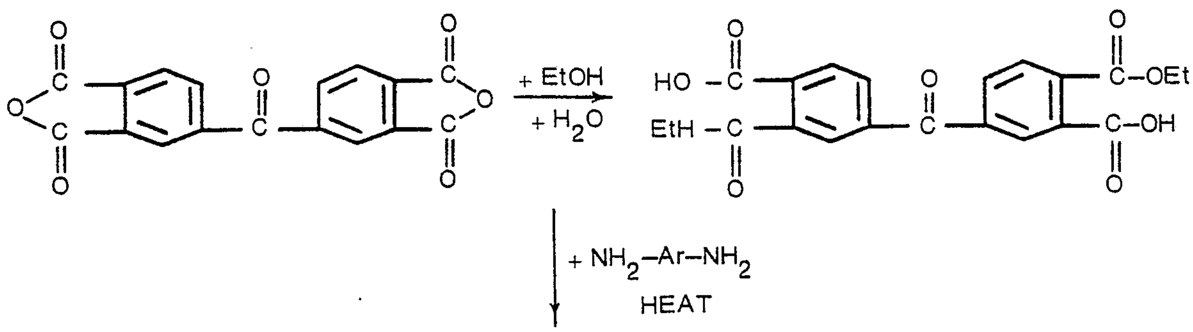


(ii) Amidization:

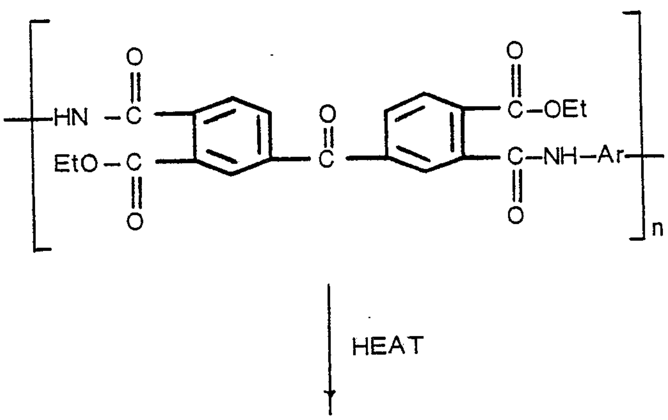


(iii) Imidization:

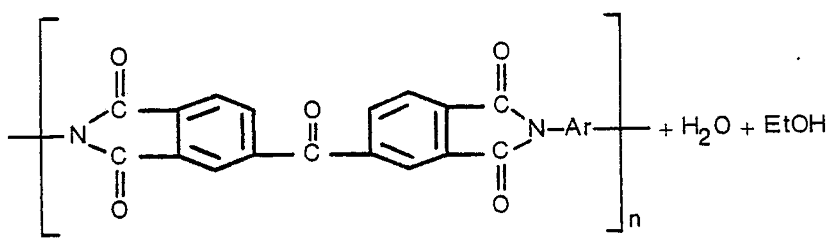


One advantage of our invention, alluded to above, is that advantage can be taken of its principles to provide polyimides which have the attributes of those state-of-the-art copolymides disclosed in U.S. Reissue Patent No. 30,213 and in application No. 935,378, and, at the same time, have such additional desirable attributes as a wider range of mechanical properties, greater flexibility and resilience, and greater fatigue resistance and durability.

Also, our novel compositions have the advantage of great versatility; they can, for example, be produced as foams useful for cushioning and in other applications where comfort is important, and as thermal, electrical, and acoustical insulations; and they can, on the other hand, be used in floor and wall panels and in other rigid components. They can also be molded into a wide variety of configurations; and, fillers and other additives can be compatibly compounded with them to provide optimal performance in various applications of our invention.

Terpolyimides as described above are unique insofar as we are aware. U.S. Patent Nos. 3,573,132 issued March 30, 1971, to Ducloux et al for PROCESS FOR THE PREPARATION OF POLYIMIDES and 4,043,978 issued August 23, 1977, to Schmidt et al for POLYIMIDES suggest that polyimides can be made from tetracarboxylic acids or anhydrides and aliphatic, aromatic, heterocyclic and other diamines and that mixtures of diamines can be employed. However, there is nothing in either patent which would lead one to the particular combination of aromatic plus heterocyclic and aliphatic diamines we employ or which suggests the relative proportions of diamines needed to take advantage of that combination; and there is nothing in either patent which suggests how a polymer with our particular combinations of diamines could be made or that anything would be gained by making such compositions.

From the foregoing it will be apparent to the reader that one important and primary object of our invention resides in the provision of a new family of polymers which are unique in a variety of respects.

Related and also important but more specific objects of the present invention include:

the provision of polymers and compositions containing them which are fire resistant and which give off little or no smoke or toxic compounds when subjected to high temperature, oxidative degradation;

which are strong and durable;

which, when formulated as foams, have improved flexibility and resiliency, fatigue resistance, and compression set;

which are so versatile that they can be employed for such diverse purposes as cushioning and insulation of different types, in panels and other components requiring rigidity and structural strength, and as molding powders.

Another important and again related object of our invention resides in the provision of novel, improved polymers which are terpolyimides derived from a benzophenonetetracarboxylic acid ester and a combination of aromatic heterocyclic, and aliphatic diamines.

Still other important and primary objects of the present invention reside in the provision of precursors for the polymers identified above and in the provision of processes for making those polymers and for converting the precursors to the corresponding polymers.

Certain important objects of the present invention have been identified above. Other important objects and advantages and additional novel features of the invention will be apparent to those skilled in the relevant arts from the foregoing general description of the invention; from the appended claims; and from the following examples, which are intended to illustrate and not restrict the scope of the invention.

## Example I

3,3',4,4'-Benzophenonetetracarboxylic acid dianhydride (BTDA) (322.23 g, 1.0 mole) was added to 240 ml of methyl alcohol and 24 ml of water in a one-liter, three-neck flask equipped with a thermometer, a mechanical stirrer, and a reflux condenser. After addition, the mixture was refluxed until clear. The mixture was then refluxed for an additional 60 minutes to ensure complete reaction of the BTDA to its half (or di-) ester.

The contents of the flask were then cooled to 25—35°C (77—95°F).

2,6-Diaminopyridine (2,6 DAP) (32.8 g, 0.3 mole) and p,p'-methylene dianiline (MDA) (99.1 g, 0.5 mole) were added to the half ester solution and the contents mixed for 15 minutes.

1,6-Diaminohexane (1,6 DAH) (23.7 g, 0.2 mole) was next added to the mixture. This was done slowly enough that the reaction temperature did not exceed 65°C (149°F).

The result was a liquid resin precursor which can be used in that form as discussed above.

In a typical instance involving the formation of a low density, high strength, rigid panel, the liquid resin is compounded with selected fillers in a variable speed mixer until the fillers are thoroughly wetted. Glass cloth wetted with the resin is placed on a sheet of aluminum foil. The resin mixture is spread over the glass cloth and covered with another piece of liquid resin wetted glass cloth. Solvent is removed by drying the wet panel in a microwave oven on a sheet of Teflon coated glass cloth at a power output of 1.25 KW for a period of 3 to 5 minutes.

The dried panel is then foamed and cured. Foaming of the panel can be carried out in the microwave oven at a power output of 5.0 KW for six minutes between two sheets of Pyroceran with the thickness of the panel being controlled by Teflon spacers extending between the sheets. The panels can then be cured in a circulating air oven at a temperature of 287.7°C (550°F) for 30 minutes.

## Example II

In an instance leading to a flexible, resilient foam, a liquid resin as described in Example I and made by the process described in that Example was first compounded with 0.1 weight percent of X-3 surfactant, based on the weight of its ester and amino constituents, and then mixed with a 30 phr (parts per hundred parts of resin) dilution ratio of alcohol. A Niro Mobile spray dryer was heated to an inlet temperature of 100°C (212°F) and an outlet temperature of 70°C (158°F). The liquid resin was then fed into the dryer with the feed being manually adjusted throughout the operation to keep the dryer outlet temperature in the range of 69—71°C (156—160°F).

This produced a powder which was collected, sieved through a Tyler 48 mesh (297 μm) sieve, and rolled for 30 minutes in a round plastic bottle.

This powder is, essentially, a solid state solution of unreacted diamines and 3,3',4,4'-benzophenonetetracarboxylic acid diester.

A flexible terpolyimide insulating foam was produced from the power precursor using a Gerling Moore Batch Cavity Model 4115 microwave oven operating at a frequency of 2450 MHz and a power of 5 KW.

The precursor was spread on a Teflon coated glass cloth substrate and placed in the microwave cavity at room temperature. After two to twelve minutes of exposure to the microwave field, depending upon the particular test being conducted, the powder expanded into a homogeneous, cellular foam block. This block was thermally cured into a flexible and resilient foam by heating it at 260°C (500°F) for two hours.

The foam rise, cellular structure, resiliency, density, fatigue resistance, and compression set of the foam were then identified.

Resiliency was determined by the ball rebound method described in ASTM Designation D-1564, Suffix B, using a tester fabricated and calibrated in accord with that procedure.

Compression set of the foam at 90 percent compression was determined according to the same ASTM Designation, Method B, using two steel plates held parallel to each other by clamps. The space between the plates was adjusted to the required thickness by spacers.

The resistance of the foam to cycle shear loadings, i.e., its fatigue resistance, was determined in accord with ASTM Designation D-1564, Procedure B, with the exception that examination and measurement of the foam for loss of thickness was made at 10,000 and 20,000 cycles. The fatigue tester was constructed in accord with the same ASTM Designation.

Performance of the foam was detected qualititatively by looking for embrittlement and degradation of the cellular structure and quantitatively by the ball rebound resiliency method and by weight change.

Other tests involved visual observation of the products for cellular structure, foaming behavior, and imperfections; flame resistance using a Meker burner; and hydrolytic stability.

Numerical and qualitative test results are tabulated below:

Table 1

| Density | | 90% Compression Set % Loss After 30 Minute Recovery | Resiliency Ball Rebound | Foam Characteristics |
|---|---|---|---|---|
| $lbs/ft^3$ | $kg/m^3$ | | | |
| 1.44 | 23.0 | 30 | 55 | Flexible, resilient, medium cell size |

The foam resisted the open flame of the Meker burner for up to 20 minutes, and it exhibited almost no change after having been kept at 100 percent relative humidity at 60°C (140°F) for 30 days.

Example III

To demonstrate that other aliphatic diamines can be employed in the novel family of polymers disclosed herein, the procedure described in Example I was repeated, using a variety of aliphatic diamines. The liquid resins thus obtained were then dried and converted to terpolyimide foams using the procedure described in Example II.

Also, to further illustrate how modifications in the formulation of the precursor can be utilized to control the properties of the terpolyimide, the molar ratios of the aliphatic and heterocyclic diamines to the BTDA ester were varied over a considerable range.

The resulting terpolyimide foams were subjected to the analyses described in Example II. Many of the results are tabulated below, and others are discussed in the narrative following the Table:

Table 2

| Foam Resin Number[3] | (Molar Ratios) Aliphatic Diamine[1] | Density lbs/ft$^3$ | Density kg/m$^3$ | 90% Compression Set % Loss After 30 Minute Recovery | Resiliency Ball Rebound | Foam Characteristics |
|---|---|---|---|---|---|---|
| Copolyimides | None | 0.538 | 8.6 | 52 | 55 | Flexible, resilient, good structure |
| Group 1 | (1.0:0.3:0.6:0.1) | | | | | |
| 1 | Propyl[2] | 1.44 | 23.0 | 46 | 50 | Flexible, resilient, good structure |
| 2 | Butyl | 1.32 | 21.1 | 63 | 45 | Flexible, resilient, good structure |
| 3 | Hexa | 1.36 | 21.8 | 48 | 55 | Flexible, resilient, good structure |
| 4 | Octa | 0.943 | 15.1 | 39 | 50 | Flexible, resilient, striated |
| 5 | Dodeca | 1.62 | 25.9 | 42 | 50 | Flexible, resilient, large cell size, brittle |
| 6 | Jeffamine D-230 | 1.11 | 17.8 | 21 | 70 | |
| Group 2 | (1.0:0.2:2.0:0.6:0.2) | | | | | |
| 7 | Propyl | 0.840 | 13.4 | 40 | 40 | Flexible, resilient, good structure |
| 8 | Butyl | 1.25 | 20.0 | 53 | 53 | Flexible, resilient, good structure |
| 9 | Hexa | 0.817 | 13.1 | 47 | 55 | Flexible, resilient, good structure |
| 10 | Octa | 1.40 | 22.4 | 43 | 35 | Flexible, resilient, good structure |
| 11 | Dodeca | 3.32 | 53.0 | 46 | 70 | Flexible, resilient, good structure |
| 12 | Jeffamine D-230 | -- | -- | -- | -- | Brittle, very large cell size, poor foam |

Table 2 (Continued)

| Foam Resin Number[3] | (Molar Ratios) Aliphatic Diamine[1] | Density $lbs/ft^3$ | Density $kg/m^3$ | 90% Compression Set % Loss After 30 Minute Recovery | Resiliency Ball Rebound | Foam Characteristics |
|---|---|---|---|---|---|---|
| Group 3 | (1.0:0.1:0.6:0.3) | | | | | |
| 13 | Propyl | -- | -- | -- | -- | Rigid foam, collapsed and degraded on heating |
| 14 | Butyl | 1.48 | 23.7 | 63 | 50 | Flexible, resilient, fair structure |
| 15 | Hexa | 1.37 | 21.9 | 71 | 50 | Flexible, resilient, fair structure |
| 16 | Octa | 1.33 | 21.2 | 68 | 45 | Flexible, resilient, good structure |
| 17 | Dodeca | 0.778 | 13.5 | 45 | 70 | Flexible, resilient, good structure |
| Group 4 | (1.0:0.3:0.5:0.2) | | | | | |
| 18 | Propyl | 1.33 | 21.2 | 40 | 50 | Flexible, resilient, good structure |
| 19 | Butyl | 0.835 | 13.4 | 25 | 45 | Flexible, resilient, good structure |
| 20 | Octa | 0.845 | 13.5 | 22 | 70 | Flexible, resilient, medium cell size |
| 21 | Hexa | 1.44 | 23.0 | 30 | 55 | Flexible, resilient, medium cell size |
| 22 | Dodeca | 0.565 | 9.04 | 23 | 65 | Flexible, resilient, good structure |
| 23 | Jeffamine D-230 | -- | -- | -- | -- | Brittle, very large cell size, collapsed on heating |
| Group 5 | (1.0:0.3:0.4:0.3) | | | | | |
| 24 | Butyl | 1.15 | 18.3 | 31 | 50 | Flexible, resilient, good structure |
| 25 | Hexa | 0.399 | 6.36 | 7 | 55 | Flexible, resilient, highly reticulated |

**Table 2 (Continued)**

| Foam Resin Number[3] | (Molar Ratios) Aliphatic Diamine[1] | Density | | 90 Compression Set % Loss After 30 Minute Recovery | Resiliency Ball Rebound | Foam Characteristics |
|---|---|---|---|---|---|---|
| | | $lbs/ft^3$ | $kg/m^3$ | | | |
| Group 6 | (1.0:0.3:0.55:0.15) | | | | | |
| 26 | Hexa | 1.17 | 18.7 | 44 | -- | Flexible, resilient, good structure, voids |

TABLE 2 (Continued)

1. In the order of: 3,3′,4,4′-benzophenonetetracarboxylic acid ester; 2,6-diamino pyridine; p,p′-methylene dianiline; aliphatic diamine.
2. Indication of a radical is used to identify the corresponding aliphatic diamine; e.g., "propyl" = 1,3-diamino propane.
3. Each resin contained 0.1 weight percent of X-3 surfactant, and methanol was used as the esterification agent.
4. This entry, provided for comparison purposes, involved a *copolyimide* foam derived in essentially the same manner as the foams of Groups 1—6 from a precursor having a 1.0:0.3:0.7 molar ratio of 3,3′,4,4′-benzophenonetetracarboxylic acid ester; 2,6-diamino pyridine; and p,p′-methylene dianiline.

The Group 1 foams generally exhibited better compression set values and higher density than foams produced from the copolyimide resin with the Jeffamine D-230 giving useable foams with excellent compression set values (when these foams were scaled up to a large size, the quality of the cell structure worsened).

The Group 2 foams were generally comparable in mechanical characteristics to those of Group 1 except that Jeffamine 230 produced foams which exhibited poor characteristics.

Foams of Group 3 produced smoke and continued to burn for 5—15 seconds after removal from the flame. However, these foams were in many respects satisfactory; and they can accordingly be used where flame resistance is not a controlling criteria.

The Group 4 foams had the most homogeneous cellular structure with the exception of foams made with Jeffamine D-230 (Resin 22). A significant advantage of the foams derived from the precursors of Group 4 is the improved compression set.

The densities of these foams are considerably higher than those of the copolyimide foam which is a drawback in applications where weight is at a premium. However, this is offset by increased fatigue resistance.

The Group 5 foams had good structure and excellent compression set properties in one case. However, these foams were found to be less fire resistant than is characteristic of polyimides.

The Group 6 foam No. 26 was of particular interest. It had considerably decreased fire resistance, indicating that aliphatic diamines concentrations lower than 0.3 mole should be employed in applications where maximum fire resistance is wanted, at least if the aliphatic amine is 1,6 diaminohexane.

## Example IV

That the properties of our novel terpolyimides can be selectively altered by incorporating a surfactant in the precursor and by varying its concentration is shown by series of tests conducted as described in Example I and II except that AS-2 surfactant was employed. The surfactant concentration of the 1.0 BTDA ester; 0.3 2,6 DAP:0.5MDA:0.2 DAH formulation was varied from 0.1 to 1.5 weight percent. The results are tabulated below:

Table 3

| Foam No. | Surfactant (AS-2) Concentration Percent | Density | | Indentation Load Deflection (ILD)[1] | | | | Compression Set Loss (Percent) | Resiliency Before Fatigue | After Fatigue (10,000 Cycles) | |
|---|---|---|---|---|---|---|---|---|---|---|---|
| | | | | N | | Lbs. | | | | | |
| | | Kg/m3 | $Lbs/ft^3$ | 25% | 65% | 25% | 65% | | | Resiliency | Height Loss Percent |
| 1 | 0.1 | 24.0 | 1.5 | 293.6 | 1427.8 | 66 | 321 | 49 | 50 | 55 | +3.9 |
| 2 | 0.25 | 25.6 | 1.6 | 266.9 | 1352.2 | 60 | 304 | 37 | 45 | 47 | +5.3 |
| 3 | 0.5 | 22.4 | 1.4 | 266.9 | 1165.4 | 60 | 262 | 35 | 40 | 37 | +2.0 |
| 4 | 0.75 | 22.4 | 1.4 | 195.7 | 1009.7 | 44 | 227 | 34 | 40 | 43 | -2.9 |
| 5 | 1.0 | 18.4 | 1.15 | 155.7 | 800.7 | 35 | 180 | 27 | 45 | * | * |
| 6 | 1.5 | 17.0 | 1.06 | 155.7 | 809.5 | 35 | 182 | 27 | 50 | * | * |

* Cellular structure collapsed after fatigue

1. Preformed in accord with ASTM Standard D-1564

Example V

We pointed out above that the order in which the diamines are added to the soluiton of esterified BTDA is an important feature of our invention. This is demonstrated by tests in which the procedures of Examples I and II were followed except for use of the Resin 21 formulation and:

a) addition of the heterocylic diamine followed in order by the aromatic and aliphatic diamines at intervals of 15 minutes; and

b) addition of the aromatic diamine followed in order by the heterocyclic and aliphatic diamines at intervals of 15 minutes.

The addition of the diamines was started with the reaction mixture at a temperature of 30—35°F (86—95°F). The temperature was allowed to increase freely to approximately 50°C (122°F) and then controlled by reducing the rate of the addition of the diamines. Finally, the reaction mixture was heated to and maintained at 60—65°C (140—149°F) for five minutes.

Addition and complete dissolution of the aromatic diamine before the heterocyclic and the aliphatic diamines were added (option b) produced foams with fewer flaws and significantly less foam collapse at the end of the curing cycle.

Example VI

Particle size is another parameter that significantly affects the properties of terpolyimide foams prepared in accord with the principles of our invention. This was demonstrated by a series of tests involving a terpolyimide containing diaminohexane.

Various particle sizes were obtained by sieving the powdered precursor through a Tyler mesh screen and by comminuting it in a Pulvette bench model grinder.

All foams were produced by foaming and curing the precursor on Teflon coated glass (type 7267/114) in a 15 kW microwave oven using a powder loading of 15 kg (33 lbs.) at a thickness of 6.35 cm (2.5 inches).

The data resulting from this series of tests is summarized below:

Table 4

| Particle Size (Tyler Mesh) | Indentation Load Deflection | | | | Foam Quality |
|---|---|---|---|---|---|
| | 25% | | 65% | | |
| | N | (lbf) | N | (lbf) | |
| #25 | 138 | 39 | 534 | 120 | Good cellular structure |
| #50 | 245 | 55 | 1076 | 242 | Rigid structure |
| Pulverized (maximum size less than 50 microns) | 267 | 60 | 1054 | 237 | Rigid structure, large flaws |

The tabulated data suggests that larger particle size precursors yield more usable foams and a more homogeneous cellular structure with fewer imperfections than foams with a maximum particle size of 50 µm and lower.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description; and all changes which come within the meaning and equivalency of the claims are therefore intended to be embraced therein.

**Claims**

1. A foamable terpolyimide precursor comprising an alkyl ester or mixture of esters of 3,3′,4,4′-benzophenonetetracarboxylic acid, a heterocyclic diamine and,an aromatic diamine characterised in that the precursor also includes at least one other diamine which is an aliphatic diamine and is in the form of an essentially stoichiometric mixture of the ester and the three or more amines with 0.1 to 0.3 mole of aliphatic diamine and from 0.05 to 0.9 mole of heterocyclic diamine per mole of the ester(s).

2. A terpolyimide precursor according to claim 1 characterised in that the aliphatic diamine has from three to twelve carbon atoms.

3. A terpolyimide precursor according to claim 2 characterised in that the aliphatic diamine has not more than six carbon atoms.

4. A terpolyimide precursor according to claim 2 or claim 3 characterised in that the aliphatic amine has an even number of carbon atoms.

5. A terpolyimide precursor according to claim 1 characterised in that the aliphatic diamine has the formula:

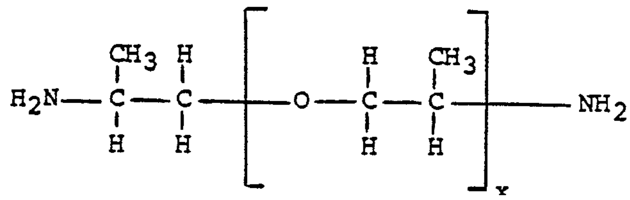

where x is of the order of 2.6.

6. A terpolyimide precursor according to any of the precediong claims characterised in that the precursor includes a surface active agent in an amount effective to improve the bubble stability of and produces a more uniform cellular structure in the terpolyimide.

7. A terpolyimide precursor according to any of the preceding claims characterised in that the precursor is a dry powder and has a maximum particle size of at least 50 µm.

8. A terpolyimide precursor according to any of the preceding claims characterised in that the ester is a methyl or ethyl half ester of 3,3′,4,4′-benzophenone-tetracarboxylic acid and the diamines are 2,6-diamino pyridine, p,p′-methylene dianiline, and 1,6-diamino hexane.

9. A terpolyimide precursor according to claim 8 characterised in that the molar ratio of the ester and diamine constituents is:

| | |
|---|---|
| 3,3′,4,4′-benzophenonetetracarboxylic acid | 1.0 |
| 2,6-diamino pyridine | 0.3 |
| p,p′-methylene dianiline | 0.4—0.65 |
| 1,6-diamino hexane | 0.11—0.3. |

10. A terpolyimide precursor according to any of the preceding claims characterised in that the precursor includes a filler intimately admixed with said mixture of diamines and tetracarboxylic acid ester(s).

11. A method of preparing a foamable terpolyimide precursor as claimed in any of the preceding claims characterised in that it includes the steps of: dissolving a benzophenonetetracarboxylic acid or anhydride in an excess of an alkyl alcohol to form a solution of an ester of the acid and adding to and dissolving in said solution in amounts such that the imide forming functionalities are substantially equimolar a heterocyclic diamine, an aromatic diamine, and an aliphatic diamine, there being from 0.1 to 0.3 mole of aliphatic diamine and from 0.05 to 0.9 mole of heterocyclic diamine per mole of 3,3′, 4,4′-benzophenonetetracarboxylic acid ester and the order of addition of the diamines to the solution being such that neither the aromatic nor the heterocyclic diamines are added after the aliphatic diamine.

12. A method according to claim 11 characterised in that said aromatic diamine is added first to said solution and in which said aromatic diamine is fully dissolved before said heterocyclic and aliphatic diamines are added.

13. A method according to claim 11 or claim 12 characterised in that the method includes the step of adding to the ester-diamine solution a surfactant in an amount effective to improve the bubble stability of and produce a more homogenous cellular structure in the terpolyimide to which the precursor can be converted.

14. A method according to any of claims 11 to 13 characterised in that the method includes the step of reducing the material existing after the dissolution of the diamines in the esterification agent to a dry particulate form.

15. A method according to any of claims 11 to 14 charaterised in that the temperature of the 3,3′, 4,4′-benzophenonetetracarboxylic acid solution is kept below the temperature of the esterification agent while the diamines are dissolved in said solution.

16. A method according to any of claims 11 to 15 characterised in that the aromatic diamine is completely dissolved in the material existing after the dissolution of the diamines in the esterification agent before the heterocyclic and aliphatic diamines are added to said material.

17. A method according to any of claims 11 to 16 characterised in that the material existing after the dissolution of the diamines in the esterification agent is reduced to a dry particulate form by spray drying.

18. A terpolyimide characterised in that it is derived from a precursor as claimed in any of claims 1 to 10 in which the esterification agent is methyl or ethyl alcohol and the diamines are 2,6-diamino pyridine, p,p'-methylene dianiline, and 1,6-diamino hexane.

19. A terpolyimide characterised in that it is obtained by a process which includes the method of any of claims 11 to 17 and material resulting from said method to effect first amidization and then imidization of the material existing after the dissolution of said diamines.

20. A method of preparing a terpolyimide foam characterised in that the method includes the steps of the method of any of claims 11 to 17 and then converting the resultant material to a polymeric foam.

21. A method according to claim 20 characterised in that said material is converted to a polymeric foam by exposing it to microwave radiation.

22. A method according to claim 21 characterised in that the exposure of said material to microwave radiation is followed by a thermal post cure.

23. A method according to claim 20 characterised in that said material is converted to a polymeric foam by exposing it to thermal energy.

24. A method according to any of claims 20 to 23 characterised in that the method includes the step of intimately admixing a filler with said mixture of diamines and tetracarboxylic acid ester(s).

25. A method of preparing a terpolyimide characterised in that the method includes the step of converting to polymeric form a precursor as claimed in any of claims 1 to 10.

26. A method according to claim 25 characterised in that the precursor is a dry powder and has a maximum particle size of at least 50 µm and/or ester and diamines are as defined in any of claims 18 to 20.

**Patentansprüche**

1. Schäumbarer Terpolyimid-Vorläufer, enthaltend einen Alkylester oder eine Mischung von Estern der 3,3', 4,4'-Benzophenon-Tetracarbonsäure, ein heterocyclisches Diamin und ein aromatisches Diamin, dadurch gekennzeichnet, daß der Vorläufer außerdem mindestens ein weiteres Diamin enthält, das ein aliphatisches Diamin ist und in Form einer im wesentlichen stöchiometrischen Mischung des Esters und der drei oder mehr Amine mit 0,1 bis 0,3 Mol des aliphatischen Diamins und 0,05 bis 0,9 Mol des heterocyclischen Diamins pro Mol des Esters oder der Ester vorliegt.

2. Terpolyimid-Vorläufer nach Anspruch 1, dadurch gekennzeichnet, daß das aliphatische Diamin 3 bis 12 Kohlenstoffatome hat.

3. Terpolyimid-Vorläufer nach Anspruch 2, dadurch gekennzeichnet, daß das aliphatische Diamin nicht mehr als 6 Kohlenstoffatome hat.

4. Terpolyimid-Vorläufer nach Anspruch 2 oder 3, dadurch gekennzeichnet, daß das aliphatische Diamin eine gerade Anzahl von Kohlenstoffatomen hat.

5. Terpolyimid-Vorläufer nach Anspruch 1, dadurch gekennzeichnet, daß das aliphatische Diamin die Formel

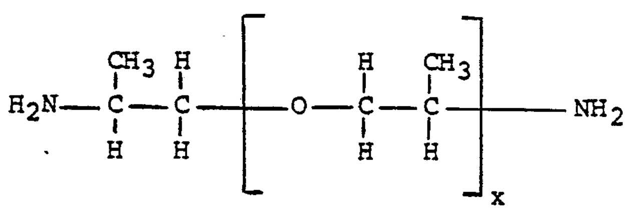

hat, wobei x in der Größenordnung von 2,6 liegt.

6. Terpolyimid-Vorläufer nach einem der vorhergehenden Ansprüche, dadurch gekennzeichnet, daß der Vorläufer ein oberflächenaktives Mittel in einer wirksamen Menge aufweist, um die Blasenstabilität des Terpolyimids zu verbessern, und eine gleichmäßigere Zellstruktur in dem Terpolyimid erzeugt.

7. Terpolyimid-Vorläufer nach einem der vorhergehenden Ansprüche, dadurch gekennzeichnet, daß der Vorläufer ein trockenes Pulver ist und eine maximale Teilchengröße von höchstens 50 µm hat.

8. Terpolyimid-Vorläufer nach einem der vorhergehenden Ansprüche, dadurch gekennzeichnet, daß der Ester ein Methyl- oder Ethylhalbester der 3,3', 4,4'-Benzophenon-Tetracarbonsäure ist und die Diamine 2,6-Diaminopyridin, p,p'-Methylendianilin und 1,6-Diaminohexan sind.

9. Terpolyimid-Vorläufer nach Anspruch 8, dadurch gekennzeichnet, daß das Molverhältnis der Ester- und Diaminbestandteile gegeben ist durch:

| | |
|---|---|
| 3,3', 4,4'-Benzophenon-Tetracarbonsäure | 1,0 |
| 2,6-Diaminopyridin | 0,3 |
| p,p'-Methylendianilin | 0,4 bis 0,65 |
| 1,6-Diaminohexan | 0,1 bis 0,3 |

10. Terpolyimid-Vorläufer nach einem der vorhergehenden Ansprüche, dadurch gekennzeichnet, daß der Vorläufer einen Füllstoff enthält, der mit der Mischung der Diamine und des bzw. der Tetracarbonsäureester innig vermischt ist.

11. Verfahren zur Herstellung eines schäumbaren Terpolyimid-Vorläufers nach einem der vorhergehenden Ansprüche, dadurch gekennzeichnet, daß es folgende Schritte aufweist: Lösen einer Benzophenon-Tetracarbonsäure oder ihres Anhydrids in einem Überschuß eines Alkylalkohols zur Bildung einer Lösung eines Esters der Säure und Hinzufügen sowie Lösen in der Lösung in Mengen, daß die das Imid bildenden Funktionalitäten im wesentlichen äquimolar sind, eines heterocyclischen Diamins, eines aromatischen Diamins und eines aliphatischen Diamins, wobei 0,1 bis 0,3 Mol des aliphatischen Diamins und 0,05 bis 0,9 Mol des heterocyclischen Diamins pro Mol des 3,3', 4,4'-Benzophenon-Tetracarbonsäureesters verwendet werden, wobei die Reihenfolge der Hinzufügung der Diamine zur Lösung so ist, daß weder das aromatische noch das heterocyclische Diamin nach dem aliphatischen Diamin hinzugefügt werden.

12. Verfahren nach Anspruch 11, dadurch gekennzeichnet, daß das aromatische Diamin zuerst zu der Lösung hinzugefügt wird und daß das aromatische Diamin vollständig gelöst wird, bevor die heterocyclischen und aliphatischen Diamine hinzugefügt werden.

13. Verfahren nach Anspruch 11 oder 12, dadurch gekennzeichnet, daß das Verfahren den Schritt enthält, daß der Ester-Diamin-Lösung ein oberflächenaktives Mittel in einer Menge hinzugefügt wird, die wirksam ist, um die Blasenstabilität im Terpolyimid zu verbessern und eine homogenere Zellstruktur in dem Terpolyimid zu erzeugen, in das der Vorläufer umgewandelt werden kann.

14. Verfahren nach einem der Ansprüche 11 bis 13, dadurch gekennzeichnet, daß das Verfahren den Schritt der Überführung des Materials, das nach der Lösung der Diamine in dem Esterbildungsmittel vorliegt, in eine trockene teilchenförmige Form enthält.

15. Verfahren nach einem der Ansprüche 11 bis 14, dadurch gekennzeichnet, daß die Temperatur der 3,3', 4,4'-Benzophenon-Tetracarbonsäurelösung unter der Temperatur des Esterbildungsmittels gehalten wird, während die Diamine in der Lösung gelöst werden.

16. Verfahren nach einem der Ansprüche 11 bis 15, dadurch gekennzeichnet, daß das aromatische Diamin vollständig in dem Material gelöst wird, das nach der Lösung der Diamine in dem Esterbildungsmittel vorliegt, bevor die heterocyclischen und aliphatischen Diamine zu dem Material hinzugefügt werden.

17. Verfahren nach einem der Ansprüche 11 bis 16, dadurch gekennzeichnet, daß das nach der Lösung der Diamine in dem Esterbildungsmittel vorliegende Material durch Sprühtrocknung in eine trockene teilchenförmige Form übergeführt wird.

18. Terpolyimid, dadurch gekennzeichnet, daß es von einem Vorläufer nach einem der Ansprüche 1 bis 10 abgeleitet ist, wobei das Esterbildungsmittel Methyl- oder Ethylalkohol ist und die Diamine 2,6-Diaminopyridin, p,p'-Methylendianilin und 1,6-Diaminohexan sind.

19. Terpolyimid, dadurch gekennzeichnet, daß es durch einen Prozeß erhalten ist, der das Verfahren nach einem der Ansprüche 11 bis 17 und das aus diesem Verfahren resultierende Material enthält, um zuerst die Amidisierung und dann die Imidisierung des Materials vorzunehmen, das nach der Lösung der Diamine vorliegt.

20. Verfahren zur Herstellung eines Terpolyimidschaumes, dadurch gekennzeichnet, daß das Verfahren die Schritte des Verfahrens nach einem der Ansprüche 11 bis 17 und dann die Umwandlung des resultierenden Materials in einen Polymerschaum enthält.

21. Verfahren nach Anspruch 20, dadurch gekennzeichnet, daß das Material in einen Polymerschaum umgewandelt wird, indem man es einer Mikrowellenstrahlung aussetzt.

22. Verfahren nach Anspruch 21, dadurch gekennzeichnet, daß sich an die Bestrahlung des Materials mit Mikrowellenstrahlung eine thermische Nachbehandlung anschließt.

23. Verfahren nach Anspruch 20, dadurch gekennzeichnet, daß das Matieral in einen Polymerschaum umgewandelt wird, indem man es thermischer Energie aussetzt.

24. Verfahren nach einem der Ansprüche 20 bis 23, dadurch gekennzeichnet, daß das Verfahren den Schritt der innigen Vermischung eines Füllstoffes mit der Mischung der Diamine und des oder der Tetracarbonsäureester enthält.

25. Verfahren zur Herstellung eines Terpolyimids, dadurch gekennzeichnet, daß das Verfahren den Schritt der Umwandlung eines Vorläufers nach einem der Ansprüche 1 bis 10 in polymere Form enthält.

26. Verfahren nach Anspruch 25, dadurch gekennzeichnet, daß der Vorläufer ein trockenes Pulver ist und eine maximale Teilchengröße von höchstens 50 µm hat und/oder Ester und Diamine wie in einem der Ansprüche 18 bis 20 definiert vorliegen.

**Revendications**

1. Précurseur de terpolyimide moussable comprenant un ester d'alkyle ou un mélange d'esters de l'acide 3,3', 4,4'-benzophénonetétracarboxylique, une diamine hétérocyclique et une diamine aromatique, caractérisé en ce que le précurseur comprend également au moins une autre diamine qui est une diamine aliphatique et il est sous la forme d'une mélange sensiblement stoechiométrique de l'ester et des trois amines ou davantage, avec 0,1 à 0,3 mole de diamine aliphatique et de 0,05 à 0,9 mole de diamine hétérocyclique par mole du ou des esters.

2. Précurseur de terpolyimide suivant la revendication 1, caractérisé en ce que la diamine aliphatique comporte de 3 à 12 atomes de carbone.

3. Précurseur de terpolyimide suivant la revendication 2, caractérisé en ce que la diamine aliphatique ne comporte pas plus de 6 atomes de carbone.

4. Précurseur de terpolyimide suivant la revendication 2 ou la revendication 3, caractérisé en ce que l'amine aliphatique comporte un nombre pair d'atomes de carbone.

5. Précurseur de terpolyimide suivant la revendication 1, caractérisé en ce que la diamine aliphatique répond à la formule:

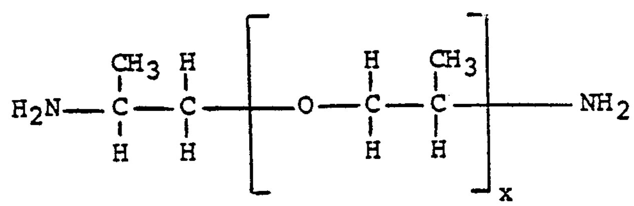

dans laquelle x est de l'ordre de 2,6.

6. Précurseur de terpolyimide suivant l'une quelconque des revendications précédentes, caractérisé en ce que le précurseur contient un agent tensio-actif en quantité efficace pour améliorer la stabilité de bulle et produire une structure cellulaire plus uniforme dans le terpolyimide.

7. Précurseur de terpolyimide suivant l'une quelconque des revendications précédentes, caractérisé en ce que le précurseur est une poudre sèche et a une dimension maximale de particule d'au moins 50 µm.

8. Précurseur de terpolyimide suivant l'une quelconque des revendications précédentes, caractérisé en ce que l'ester est un demi-ester méthylique ou éthylique de l'acide 3,3', 4,4'-benzophénonetétracarboxylique et les diamines sont les 2,6-diaminopyridine, p,p'-méthylènedianiline et 1,6-diaminohexane.

9. Précurseur de terpolyimide suivant la revendication 8, caractérisé en ce que le rapport molaire des constituants ester et diamine est le suivant:

| | |
|---|---|
| — acide 3,3', 4,4'-benzophénonetétracarboxylique | 1,0 |
| — 2,6-diaminopyridine | 0,3 |
| — p,p'-méthylènedianiline | 0,4—0,65 |
| — 1,6-diaminohexane | 0,11—0,3. |

10. Précurseur de terpolyimide suivant l'une quelconque des revendications précédentes, caractérisé en ce que le précurseur comprend une charge intimement mélangée avec ledit mélange de diamines et d'ester(s) d'acide tétracarboxylique.

11. Procédé de préparation d'une précurseur de terpolyimide moussable suivant l'une quelconque des revendications précédentes, caractérisé en ce qu'il comprend les opérations : de dissolution d'un acide benzophénonetétracarboxylique ou d'un anhydride dans un excès d'un alcool alkylique pour former une solution d'un ester de l'acide, et d'addition et dissolution dans ladite solution, en quantités telles que les fonctions constituant l'imide sont sensiblement équimolaires, d'une diamine hétérocyclique, d'une diamine aromatique et d'une diamine aliphatique, à raison de 0,1 à 0,3 mole de diamine aliphatique et de 0,05 à 0,9 mole de diamine hétérocyclique par mole d'ester d'acide 3,3', 4,4'-benzophénonetétracarboxylique, et l'ordre d'addition des diamines à la solution étant tel que ni la diamine aromatique ni la diamine hétérocyclique ne sont ajoutées après la diamine aliphatique.

12. Procédé suivant la revendication 11, caractérisé en ce que ladite diamine aromatique est ajoutée en premier à ladite solution et en ce que ladite amine aromatique est complètement dissoute avant l'addition desdites diamines hétérocycliques et aliphatiques.

13. Procédé suivant la revendication 11 ou la revendication 12, caractérisé en ce qu'il comprend l'opération d'addition à la solution d'ester-diamine d'un agent tensio-actif en quantité efficace pour améliorer la stabilité de bulle et produire une structure cellulaire plus homogène dans le terpolyimide dans lequel le précurseur peut être converti.

14. Procédé suivant l'une quelconque des revendications 11 à 13, caractérisé en ce qu'il comprend l'opération de réduction de la matière, existant après la dissolution des diamines dans l'agent d'estérification, en une forme de particules sèches.

15. Procédé suivant l'une quelconque des revendications 11 à 14, caractérisé en ce que la température de la solution d'acide 3,3', 4,4'-benzophénonetétracarboxylique est maintenue au-dessous de la température de l'agent d'estérification pendant que les diamines sont dissoutes dans ladite solution.

16. Procédé suivant l'une quelconque des revendications 11 à 15, caractérisé en ce que la diamine aromatique est complètement dissoute dans le matériau existant après la dissolution des diamines dans l'agent d'estérification, avant l'addition des diamines hétérocyclique et aliphatique à ladite matière.

17. Procédé suivant l'une quelconque des revendications 11 à 16, caractérisé en ce que le matériau existant après la dissolution des diamines dans l'agent d'esterification est réduit en particules sèches, par séchage par pulvérisation.

18. Terpolyimide, caractérisé en ce qu'il est obtenu à partir d'un précurseur suivant l'une quelconque des revendications 1 à 10, dans lequel l'agent d'estérification est l'alcool méthylique ou l'alcool éthylique et les diamines sont les 2,6-diaminopyridine, p,p'-méthylènedianiline et 1,6-diaminohexane.

19. Terpolyimide, caractérisé en ce qu'il est obtenu selon une méthode qui comprend le procédé suivant l'une quelconque des revendications 11 à 17 et le matériau résultant dudit procédé pour effectuer d'abord l'amidification puis l'imidification du matériau existant après la dissolution desdites diamines.

20. Procédé de préparation d'une mousse de terpolyimide, caractérisé en ce que le procédé comprend les opérations du procédé suivant l'une quelconque des revendications 11 à 17, puis la transformation du matériau résultant en mousse polymère.

21. Procédé suivant la revendication 20, caractérisé en ce que ledit matériau est transformé en mousse polymère, par exposition dudit matériau à un rayonnement de micro-ondes.

22. Procédé suivant la revendication 21, caractérisé en ce que l'exposition dudit matériau à un rayonnement de micro-ondes est suivie par un post-durcissement thermique.

23. Procédé suivant la revendication 20, caractérisé en ce que ledit matériau est transformé en mousse polymère, par exposition dudit matériau à une énergie thermique.

24. Procédé suivant l'une quelconque des revendications 20 à 23, caractérisé en ce qu'il comprend l'opération de mélange intime d'une charge avec ledit mélange de diamines et d'ester(s) d'acide tétracarboxylique.

25. Procédé de préparation d'un terpolyimide, caractérisé en ce qu'il comprend l'opération de transformation en mousse polymère d'un précurseur suivant l'une quelconque des revendications 1 à 10.

26. Procédé suivant la revendication 25, caractérisé en ce que le précurseur est une poudre sèche et a une dimension maximale de particule d'au moins 50 µm et/ou l'ester et les diamines sont définis comme indiqué dans l'une quelconque des revendications 18 à 20.